# EUROPÄISCHE PATENTSCHRIFT

(11) **EP 2 392 066 B1**
(45) Veröffentlichungstag und Bekanntmachung des Hinweises auf die Patenterteilung: **27.04.2016**
(21) Anmeldenummer: 09801681.9
(22) Anmeldetag: 04.12.2009
(51) Int. Cl.: H02K 7/116, H02K 11/00

(54) **LEISTUNGSELEKTRONIK FÜR SCHALENANTRIEB**
POWER ELECTRONICS FOR A BOWL DRIVE
ÉLECTRONIQUE DE PUISSANCE POUR ORGANE D'ENTRAÎNEMENT À COQUES

(30) Priorität: 28.01.2009 DE 102009000458
(43) Veröffentlichungstag der Anmeldung: 07.12.2011
(73) Patentinhaber: Robert Bosch GmbH, 70442 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2009/066388
(87) Internationale Veröffentlichungsnummer: WO 2010/086053

(56) Entgegenhaltungen:
- DE-A1- 4 225 496
- JP-A- 2003 169 444
- US-A- 5 990 586
- US-A1- 2006 019 522
- US-A1- 2006 181 161

## Beschreibung

### Stand der Technik

Die Erfindung betrifft einen Antrieb mit einem Gehäuse, in dem ein Motor, ein Abtrieb, ein Schneckengetriebe, das den Abtrieb mit dem Motor koppelt, und eine Leistungselektronik, die an den Motor angeschlossen ist. Dabei umfasst das Gehäuse ein Motorgehäuseteil mit dem Motor, ein Abtriebsgehäuseteil mit dem Abtrieb und der Leistungselektronik und einen Flanschbereich mit dem Schneckengetriebe. Das Abtriebsgehäuseteil ist seitlich und ist schräg zum Motorgehäuseteil angeordnet und über einen Flanschbereich mit dem Motorgehäuseteil verbunden.

Es sind zahlreiche Scheibenwischervorrichtungen für Fahrzeuge bekannt. Diese sind zumeist fahrzeugspezifisch angepasst und weisen daher sowohl unterschiedliche Mechaniken, Befestigungselemente, Antriebe und Leistungselektroniken auf. Dabei wird versucht, die Baugruppenvielfalt zu reduzieren und die Systeme modular aufzubauen. Da die Scheibenwischermechanik abhängig von der zu bewischenden Geometrie der Windschutzscheibe ist, wird eine Reduzierung der Baukomponentenvielfalt vor allem bei Antriebsmotoren und der dazugehörigen Leistungselektronik vorangetrieben. Für den Antrieb von Scheibenwischervorrichtungen werden Gleichstrommotoren mit einer Elektronik verwendet. Die Antriebe beinhalten eine Leistungselektronik, ein Getriebe, einen Stecker und sind in einem Gehäuse angeordnet. Der Abtrieb ragt hierbei seitlich zur Reduzierung der Einbauhöhe am Gehäuse heraus. Ebenso resultiert dies aber auch aus dem verbauten Schneckengetriebe. Das Gehäuse des Antriebs weist sowohl Befestigungselemente auf, mit denen das Gehäuse an der Scheibenwischervorrichtung befestigt wird, als auch eine asymmetrische Ausgestaltung des Gehäuses. Das Gehäuse weist des Weiteren zwei Schalen auf, in die die Komponenten des Antriebs eingebaut sind. Aufgrund der Schalen wird der Antrieb auch Schalenantrieb genannt.

Der Schalenantrieb wird je nach Konstruktion der Scheibenwischervorrichtung und dem vorhandenen Bauraum entweder mit einer Getriebelage rechts oder mit einer Getriebelage links eingebaut. Aus diesem Grund werden, je nach Getriebelage, zwei unterschiedliche Leistungselektroniken eingebaut.

Aus der US 2006/0019522 A1 ist ein Antrieb mit einer Leistungselektronik bekannt, die einen Leistungselektronikanschluss aufweist, der in einen Flanschbereich hineinragt.

Ferner ist aus der DE 42 25 496 A1 ein Antrieb bekannt, bei dem spiegelsymmetrisch die Leistungselektronik zu einer Motorachse des Motors des Antriebs angeordnet werden kann.

### Offenbarung der Erfindung

Es ist daher Aufgabe der Erfindung, die in einem Gehäuse eines Schalenantriebs eingebaute Leistungselektronik so auszugestalten, dass die Leistungselektronik unabhängig von der Getriebelage des Schalenantriebskonzepts einbaubar ist.

Diese Aufgabe wird durch ein Gehäuse mit einer Leistungselektronik gemäß Anspruch 1 gelöst. Bevorzugte Ausführungsformen sind in den abhängigen Ansprüchen angegeben.

Erfindungsgemäß wurde erkannt, dass verschiedene Getriebelagen von Scheibenwischerantrieben zu einer hohen Varianz der Bauteilkomponenten führen. Die Varianz kann reduziert werden, indem die Bauteilkomponenten für beide Getriebelagen des Scheibenwischerantriebs geeignet sind. Hierzu ist die Leistungselektronik, die in einem Gehäuse eines Schalenantriebs eingebaut wird, plattenförmig ausgestalten und weist einen seitlich angeordneten Motoranschluss auf. Der Motor weist dabei ebenso einen Leistungselektronikanschluss auf, welcher in eingebautem Zustand der Leistungselektronik diese über ihren Motoranschluss verbindet. Dies hat den Vorteil, dass nur eine Leistungselektronik für zwei Getriebelagen des Schalenantriebs verwendbar ist.

Unter Getriebelage links im Sinn der Erfindung wird eine Getriebelage bezeichnet, bei der, wenn die Abtriebswelle zum Betrachter zeigt, die Abtriebswelle des Antriebs links der Motorwelle befestigt ist. Bei einer Getriebelage rechts befindet sich die zum Betrachter zeigende Abtriebswelle rechts der Motorwelle.

In einer weiteren Ausführungsform der Erfindung weist die Leistungselektronik zumindest ein Positionselement auf, wobei das Positionselement auf der Längsachse oder symmetrisch zur Längsachse angeordnet ist. Dies hat den Vorteil, dass die Ausgestaltung der asymmetrischen Gehäuseschalen einfacher ist und die Leistungselektronik gleichmäßig im Gehäuse befestigbar ist.

Nachfolgend wird die Erfindung anhand von Figuren ohne Beschränkung des allgemeinen Erfindungsgedankens näher erläutert. Dabei zeigt:
Fig. 1 eine schematische Darstellung einer Ausführungsform eines erfindungsgemäßen Antrieb mit einer Getriebelage rechts,
Fig. 2 eine schematische Darstellung einer erfindungsgemäßen Ausführungsform eines Antrieb mit einer Getriebelage links.

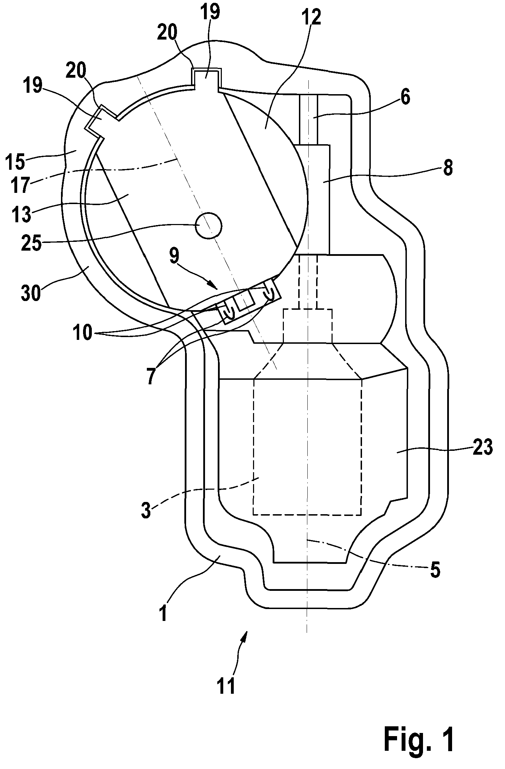

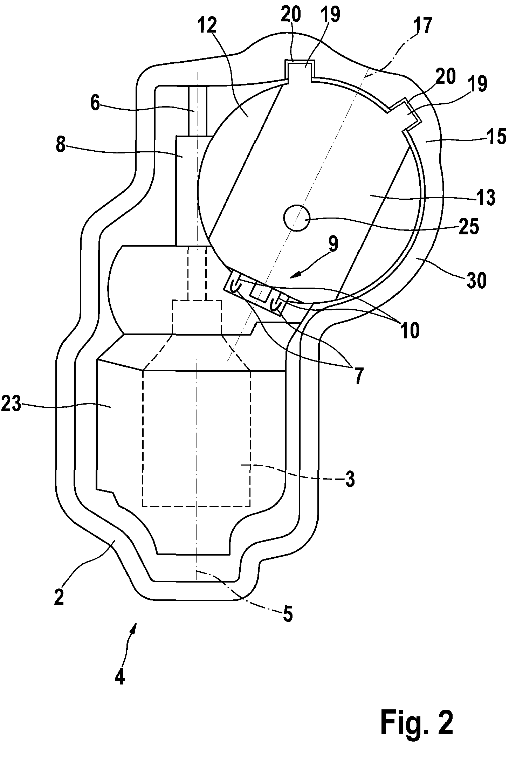

Fig. 1 und 2 zeigen schematische Darstellungen zweier erfindungsgemäßen Antriebe von Schalenantrieben. Dabei zeigt Fig. 1 einen ersten Antrieb 11 mit Getriebelage rechts, wohingegen Fig. 2 einen zweiten Antrieb 4 mit Getriebelage links zeigt. Beide Antriebe werden üblicherweise in Kraftfahrzeugen als Scheibenwischantriebe eingesetzt. Des Weiteren stehen auch weitere Einsatzmöglichkeiten in denen die Antriebe je nach Richtung der Abtriebswelle eingebaut werden müssen offen z.B. als Fensterhebermotor. Beide Antriebe 4,11 beinhalten dieselben Komponenten. Sie unterscheiden sich einzig durch das Gehäuse des Antriebs 4,11. Die weiteren Komponenten wie Motor, Getriebe oder Kommutator sind so ausgelegt, dass sie sowohl in ein Gehäuse des zweiten Antriebs 4 mit Getriebelage links, als auch in ein Gehäuse des ersten Antriebs 11 mit Getriebelage rechts einbaubar sind. Der erste Antrieb 11 weist dabei wie der zweite Antrieb 4 eine Unterschale 1,2 auf, in welche die Komponenten des Antriebs 4,11 eingebaut werden. Weitere nicht dargestellte Oberschalen verschließen jeweils den Antrieb 4, 11 nach oben hin.

Die Form der Schalen 1, 2 ist asymmetrisch ausgebildet und weist dabei einen Rand 15 auf. Innerhalb der Schale 1, 2 befindet sich ein Motor 3, der in der unteren Hälfte der Schale 1, 2 in einem Motorgehäuseteil 23 angebracht ist. Die Antriebswelle 6 des Schneckengetriebes liegt auf der Motorachse 5 des Motors 3. Oberhalb des Motors 3 ist ein Schneckengetriebe, bestehend aus einer Schnecke 8 und einem Zahnrad 12 in einem Abtriebsgehäuseteil 30, angebracht, welches die Motorachse 5 des Motors 3 um 90° umlenkt. Dabei ragt die Abtriebswelle in die Zeichenebene hinein. Die Umlenkung ist ein wesentliche Grund dafür, dass der Antrieb 4,11 eine Getriebelage links bzw. eine Getriebelage rechts aufweist. Die Antriebswelle 6 des Schneckengetriebes befindet sich in Fig. 1 linksseitig von einer Leistungselektronik 13 bzw. rechtsseitig in Fig. 2. Die Schnecke 8, welche an die Antriebswelle 6 angeschlossen ist, treibt dabei das Zahnrad 12 an, welches sich unterhalb der Leistungselektronik 13 befindet. Die Umlenkung ist notwendig, um die Drehbewegung des Motors 3 an die Scheibenwischervorrichtung zu leiten, aber gleichzeitig die Bauhöhe des Antriebs 4,11 niedrig zu halten. Dabei wird ein Schneckengetriebe verwendet, da das eine hohe Untersetzung der Motordrehzahl in einer Stufe bei gleichzeitigem niedrigen Bauraumbedarf ermöglicht. Da auch der Einbaubauraum eines Fahrzeugs beschränkt ist, wird je nach vorhandenem Platz modellabhängig der Schalenantrieb der Scheibenwischervorrichtung mit Getriebelage rechts bzw. links eingebaut. Das führt auch dazu, dass die Leistungselektronik 13 nicht auf der Motorachse 5 liegt, sondern im Bereich des Schneckengetriebes.

Der Motor 3 weist einen Leistungselektronikanschluss 7 auf, der in einen Flanschbereich der Leitungselektronik 13 zwischen dem Motorgehäuseteil 23 und dem Abtriebsgehäuseteil 30 ragt. Die Längsachse des Leistungselektronikanschlusses 7 entspricht in montiertem Zustand der Längsachse 17 der Leistungselektronik 13. Die Ausrichtung der Längsachse des Leistungselektronikanschlusses 7 ist dabei unabhängig der Mittelpunktslage des Zahnrads 12, jedoch gibt in der dargestellten Form die Mittelpunktslage des Zahnrads 12 zu dem Leistungselektronikanschlusses 7 dessen Ausrichtung vor. Die Leistungselektronik 13 kann durch Rotation im Uhrzeigersinn um eine senkrecht zur Ebene der Leistungselektronik 13 stehende Achse, die aus der Zeichenebene ragt, um den doppelten Winkel der Längsachse 17 zur Motorachse 5 von der Einbauposition im ersten Antrieb 11 der Fig. 1 in die Einbauposition im zweiten Antrieb 4 der Fig. 2 gebracht werden.

Die Leistungselektronik 13 ist plattenförmig ausgeprägt weist und dabei Positionselemente 19 sowie einen Motoranschluss 9 für das Ausgangssignal zum Motor 3 seitlich auf. Die Kontur der plattenförmigen Leistungselektronik 13 ist im Wesentlichen rechteckförmig, wobei zwei gegenüberliegende Seiten kreisförmige Konturen aufweisen, welche durch den Durchmesser des darunterliegenden Zahnrads 12 geprägt sind. Der Motoranschluss 9 der Leistungselektronik 13 ist als zwei Pins 10 ausgeführt und ist auf der Längsachse 17 angeordnet. Die Ausgestaltung der Leistungselektronik 13 ist symmetrisch zu Längsachse 17. Der Motoranschluss 9 ist dabei entsprechend der Längsachse 17 zur Motorachse 5 verdreht. Auf der Oberseite der Leistungselektronik 13 befindet sich ein Anschluss 25 für das Eingangssignal der Leistungselektronik 13. Der Anschluss 25 ist ebenso auf der Längsachse 17 der Leistungselektronik 13 angeordnet. Der Anschluss 25 kann auch zweiteilig ausgeführt sein. Um die Leistungselektronik 13 mit einem zweiteiligen Anschluss 25 sowohl in linksseitiger als auch in rechtsseitiger Getriebelage einzubauen, ist der zweiteiliger Anschluss 25 symmetrisch zu Längsachse 17 der Leistungselektronik 13 anzuordnen.

In der gezeigten Ausführungsform sind exemplarisch zwei Positionselemente 19 an der Leistungselektronik 13 angebracht. Es können jedoch weitere Positionselemente 19 angebracht werden. Wesentlich ist jedoch, dass die Positionselemente 19 symmetrisch zur oder auf der Längsachse 17 angebracht werden, um so den Einbau in beiden Getriebelagen zu gewährleisten. Die Positionselemente 19 greifen in Ausnehmungen 20 im Rand 15 der Schale 1,2 ein. Die Ausnehmungen 20 in der Schale 1,2 sind symmetrisch zur Längsachse 17 der Leistungselektronik 13 angeordnet. Sind die Positionselemente asymmetrisch angeordnet, so sind die Schalen 1,2 des Gehäuses separat auszubilden und können nicht durch Spiegelung an der Motorachse 5 ineinander überführt werden.

Der Motoranschluss 9 dient dabei zusammen mit dem Leistungselektronikanschluss 7 als weiteres Positionselement für die Befestigung der Leistungselektronik 13 in der Schale 1, 2. Dadurch wird die Leistungselektronik 13 durch die symmetrische Anordnung der Positionselemente 19 und durch den ersten Motoranschluss 9 an drei gleichmäßig im Gehäuse verteilte Punkte gehalten.

In den Leistungselektronikanschluss 7 greifen die Pins 10 des Motoranschlusses 9 der Leistungselektronik 13 ein. Das Ausgangssignal der Leistungselektronik 13 kann an den Pins 10 sowohl von einer ersten, dem Abtrieb zugewandten Seite als auch von einer zweiten, dem Abtrieb abgewandten Seite abgegriffen werden. Die Pins 10 des Motoranschlusses 9 und ihre Aufnahmen sind ebenfalls symmetrisch zur Längsachse 17 der Leistungselektronik 13 angebracht. Auf diese Weise kann der Leistungselektronikanschluss 7 in beiden Getriebelagen verwendet werden.

In einer Weiterbildung der Erfindung kann die in der dargestellte Ausführungsform gezeigte Baufläche der Leistungselektronik 13 dadurch erweitert werden, indem die nicht verrundeten Seiten der Leistungselektronik 13 vergrößert werden. Dabei sind die Maximalabmessungen begrenzt durch die maximalen Gehäuseabmessungen und den Durchmesser des Zahnrads 12. An den seitlichen Flächen besteht z. B. die Möglichkeit, einen größeren Kondensator oder ein anderes elektronisches Bauteil an der Leistungselektronik 13 anzubringen. Bei der Ausgestaltung der Leistungselektronik 13 ist darauf zu achten, dass das an den nicht verrundeten Seitenflächen eventuell asymmetrisch angeordnete elektronische Bauteil so angeordnet sind, dass es sowohl in Getriebelage rechts als auch in Getriebelage links zusammen mit der Leistungselektronik 13 einbaubar ist.

In einer Weiterbildung der Erfindung ist die Leistungselektronik 13 so ausgeprägt und miniaturisiert, dass die Leistungselektronik 13 keine Positionselemente 19 benötigt und die Leistungselektronik 13 durch Motoranschluss 9 zusammen mit dem Leistungselektronikanschluss 7 im Gehäuse des Antriebs 4, 11 gehalten wird.

## Patentansprüche

1. Antrieb (4,11) mit einem Gehäuse, in dem ein Motor (3), ein Abtrieb, ein Schneckengetriebe, das den Abtrieb mit dem Motor (3) koppelt, und eine Leistungselektronik (13), die an den Motor (3) angeschlossen ist, angeordnet ist, wobei das Gehäuse ein Motorgehäuseteil (23) mit dem Motor (3), ein Abtriebsgehäuseteil (30) mit dem Abtrieb und der Leistungselektronik (13) und einen Flanschbereich mit dem Schneckengetriebe umfasst, wobei das Schneckengetriebe ein Zahnrad (12) umfasst, wobei das Abtriebsgehäuseteil (30) seitlich und schräg zum Motorgehäuseteil (23) angeordnet und über einen Flanschbereich mit dem Motorgehäuseteil (23) verbunden ist, wobei die Leistungselektronik (13) plattenförmig ausgeführt ist, eine Längsachse (17) aufweist und über einen seitlich angeordneten Motoranschluss (9) verfügt, wobei der Motor (3) einen Leistungselektronikanschluss (7) mit eine Längsachse aufweist, wobei der Leistungselektronikanschluss (7) aus dem Motorgehäuseteil (23) in den Flanschbereich hinein ragt, **dadurch gekennzeichnet, dass** eine Längsachse des Leistungselektronikanschlusses (7) der Längsachse (17) der Leistungselektronik(13) entspricht, wobei eine Mittelpunktslage des Zahnrads (12) des Schneckengetriebes die Ausrichtung der Längsachse (17) des Leistungselektronikanschlusses (7) vorgibt, und
wobei die Längsachse des Leistungselektronikanschlusses (7) einen Winkel zur Motorachse (5) einschließt.

2. Antrieb (4, 11) nach Anspruch 1, **dadurch gekennzeichnet, dass** die Leistungselektronik (13) symmetrisch zur einer Längsachse (17) ausgebildet ist.

3. Antrieb (4, 11) nach einem der Ansprüche 1 oder 2, **dadurch gekennzeichnet, dass** die Leistungselektronik (13) zumindest einen Anschluss (25) für ein Eingangssignal der Leistungselektronik (13) aufweist und der Anschluss (25) für das Eingangssignal auf der Längsachse (17) angeordnet ist.

4. Antrieb (4, 11) nach Anspruch 3, **dadurch gekennzeichnet**, das der Anschluss (25) für das Eingangssignal der Leistungselektronik (13) zweiteilig ausgeführt ist.

5. Antrieb (4, 11) nach Anspruch 3 oder 4, **dadurch gekennzeichnet, dass** der zweiteilige Anschluss (25) der Leistungselektronik (13) symmetrisch zur Längsachse (17) angeordnet ist.

6. Antrieb (4, 11) nach einem der Ansprüchen 1 bis 5, **dadurch gekennzeichnet, dass** die Leistungselektronik (13) über zumindest ein seitlich angeordnetes Positionselement (19) verfügt, wobei das Positionselement (19) in zumindest eine Ausnehmungen (20) des Gehäuses greift, wobei das Positionselement (19) auf der Längsachse (17) oder symmetrisch zur Längsachse (17) der Leistungselektronik (13) angeordnet ist.

7. Schalenantrieb mit einem erfindungsgemäßen Antrieb (4, 11) nach einem der vorigen Ansprüche.

## Claims

1. Drive (4, 11) having a housing in which a motor (3), an output, a worm gear, which couples the output to the motor (3), and power electronics (13), which are connected to the motor (13), are arranged, wherein the housing comprises a motor housing part (23) with the motor (3), an output housing part (30) with the output and the power electronics (13), and a flange region with the worm gear, wherein the worm gear comprises a gearwheel (12), wherein the output housing part (30) is arranged laterally and obliquely with respect to the motor housing part (23) and is connected to the motor housing part (23) via a flange region, wherein the power electronics (13) are embodied in the form of a plate, have a longitudinal axis (17) and comprise a motor connection (9) which is arranged laterally, wherein the motor (3) has a power electronics connection (7) with a longitudinal axis, wherein the power electronics connection (7) projects into the flange region from the motor housing part (23), **characterized in that** a longitudinal axis of the power electronics connection (7) corresponds to the longitudinal axis (17) of the power electronics (13), wherein a centre point position of the gearwheel (12) of the worm gear predefines the orientation of the longitudinal axis (17) of the power electronics connection (7), and wherein the longitudinal axis of the power electronics connection (7) includes an angle with respect to the motor axis (5).

2. Drive (4, 11) according to Claim 1, **characterized in that** the power electronics (13) are embodied symmetrically with respect to a longitudinal axis (17).

3. Drive (4, 11) according to one of Claims 1 and 2, **characterized in that** the power electronics (13) have at least one connection (25) for an input signal of the power electronics (13), and the connection (25) for the input signal is arranged on the longitudinal axis (17).

4. Drive (4, 11) according to Claim 3, **characterized in that** the connection (25) for the input signal of the power electronics (13) is embodied in two parts.

5. Drive (4, 11) according to Claim 3 or 4, **characterized in that** the two-part connection (25) of the power electronics (13) is arranged symmetrically with respect to the longitudinal axis (17).

6. Drive (4, 11) according to one of Claims 1 to 5, **characterized in that** the power electronics (13) comprise at least one laterally arranged position element (19), wherein the position element (19) engages in at least one recess (20) of the housing, wherein the position element (19) is arranged on the longitudinal axis (17) or symmetrically with respect to the longitudinal axis (17) of the power electronics (13).

7. Bowl drive having a drive (4, 11) in accordance with the invention, according to one of the preceding claims.

## Revendications

1. Entraînement (4, 11) comprenant un boîtier dans lequel sont disposés un moteur (3), une prise de force, un engrenage à vis sans fin qui accouple la prise de force au moteur (3) et une électronique de puissance (13) qui est raccordée au moteur (3), le boîtier comprenant une partie de boîtier de moteur (23) avec le moteur (3), une partie de boîtier de prise de force (30) avec la prise de force et l'électronique de puissance (13) ainsi qu'une région de bride avec l'engrenage à vis sans fin, l'engrenage à vis sans fin comprenant une roue dentée (12), la partie de boîtier de prise de force (30) étant disposée latéralement et obliquement par rapport à la partie de boîtier de moteur (23) et étant connectée par le biais d'une région de bride à la partie de boîtier de moteur (23), l'électronique de puissance (13) étant réalisée sous forme de plaquette, présentant un axe longitudinal (17) et disposant d'un raccord de moteur (9) disposé latéralement, le moteur (3) présentant un raccord d'électronique de puissance (7) avec un axe longitudinal, le raccord d'électronique de puissance (7) faisant saillie dans la région de bride depuis la partie de boîtier de moteur (23), **caractérisé en ce qu'**un axe longitudinal du raccord d'électronique de puissance (7) correspond à l'axe longitudinal (17) de l'électronique de puissance (13), une position du centre de la roue dentée (12) de l'engrenage à vis sans fin prédéfinissant l'orientation de l'axe longitudinal (17) du raccord d'électronique de puissance (7), et l'axe longitudinal du raccord d'électronique de puissance (7) formant un angle avec l'axe de moteur (5).

2. Entraînement (4, 11) selon la revendication 1, **caractérisé en ce que** l'électronique de puissance (13) est réalisée de manière symétrique par rapport à un axe longitudinal (17).

3. Entraînement (4, 11) selon l'une quelconque des revendications 1 et 2, **caractérisé en ce que** l'électronique de puissance (13) présente au moins un raccord (25) pour un signal d'entrée de l'électronique de puissance (13) et le raccord (25) pour le signal d'entrée est disposé sur l'axe longitudinal (17).

4. Entraînement (4, 11) selon la revendication 3, **caractérisé en ce que** le raccord (25) pour le signal d'entrée de l'électronique de puissance (13) est réalisé en deux parties.

5. Entraînement (4, 11) selon la revendication 3 ou 4, **caractérisé en ce que** le raccord en deux parties (25) de l'électronique de puissance (13) est disposé de manière symétrique par rapport à l'axe longitudinal (17).

6. Entraînement (4, 11) selon l'une quelconque des revendications 1 à 5, **caractérisé en ce que** l'électronique de puissance (13) dispose d'au moins un élément de positionnement disposé latéralement (19), l'élément de positionnement (19) s'engageant dans au moins un évidement (20) du boîtier, l'élément de positionnement (19) étant disposé sur l'axe longitudinal (17) ou symétriquement par rapport à l'axe longitudinal (17) de l'électronique de puissance (13).

7. Entraînement à coques comprenant un entraînement (4, 11) selon l'invention selon l'une quelconque des revendications précédentes.
